# EUROPEAN PATENT APPLICATION

(11) **EP 4 831 216 A1**
(43) Date of publication of application: **28.10.2026**
(21) Application number: 23961921.6
(22) Date of filing: 21.12.2023
(51) Int. Cl.: C08G 59/06

(54) **AQUEOUS THERMOSETTING RESIN AND PREPARATION METHOD THEREFOR, RESIN COMPOSITION, HONEYCOMB-LIKE RESIN PRODUCT AND PREPARATION METHOD THEREFOR AND USE THEREOF**

(71) Applicant: China Petroleum & Chemical Corporation, Beijing 100728 (CN); Sinopec Shengli Oilfield Company, Dongying, Shandong 257001 (CN)
(72) Inventor: LV, Yongli, Dongying, Shandong 257001 (CN); MA, Bo, Dongying, Shandong 257001 (CN); YANG, Bin, Dongying, Shandong 257001 (CN); ZHONG, Anhai, Dongying, Shandong 257001 (CN); WANG, Chao, Dongying, Shandong 257001 (CN); YANG, Feng, Dongying, Shandong 257001 (CN); CHEN, Peisheng, Dongying, Shandong 257001 (CN); WANG, Hua, Dongying, Shandong 257001 (CN); WANG, Dan, Dongying, Shandong 257001 (CN); ZHONG, Yanlei, Dongying, Shandong 257001 (CN)
(74) Representative: Hoffmann Eitle
(86) International application number: PCT/CN2023/140765
(87) International publication number: WO 2025/129586

(57) **Abstract**

The present invention relates to the field of high polymer materials. Disclosed are an aqueous thermosetting resin and a preparation method therefor, a resin composition, a honeycomb-like resin product and a preparation method therefor and a use thereof.

## Description

### TECHNICAL FIELD

The present disclosure relates to the technical field of high polymer materials, in particular to an aqueous thermosetting resin and a preparation method therefor, a resin composition, a honeycomb-like resin product and a preparation method therefor and a use thereof.

### BACKGROUND ART

Thermosetting resins are flowable at ambient temperature or low temperature, and can be cured at a high temperature to form products having high strength, desirable heat resistance, excellent electrical properties, corrosion resistance, aging resistance, and dimensional stability, thus the thermosetting resins are widely used in electronic/electronic, energy, chemical, machinery, automotive and rail transportation, construction, and other high-tech fields.

A majority of the aqueous thermosetting resins is a stable dispersion system consisting of water as a continuous phase and thermosetting resin particles or droplets as the dispersed phase, because of the existence of water, the aqueous thermosetting resins (e.g., aqueous epoxy resins) have great significance in the fields which are inconvenient to use organic solvents; in addition, due to their environmentally friendly characteristics, the aqueous thermosetting resins have an enormous market and great development potential in the field of coatings. The aqueous thermosetting resins have strong cohesive force and a dense molecular structure, thereby exhibiting advantages such as high mechanical properties, low curing shrinkage, and heat resistance up to 200°C of the resin products.

Fracturing the formation using a fracturing fluid is one of the measures to increase production during the recovery process of oil and gas fields. The fracturing fluid contains mainly two parts: a proppant and a sand-carrying fluid, wherein the proppant is used for supporting the fractures in the formation generated by the fracturing process, and prevents the fractures from closing; the sand-carrying fluid carries the proppant from the wellbore into the fractures at a high concentration by mass. However, the sand-loading fracturing technologies have problems such as blocking with sand, equipment wear, fracturing fluid debris damage, limited conductivity of the propped fractures, and the distal end of the fractures cannot form an effective support. In order to solve the problems, the researches in China and foreign countries are mainly focused on the innovations of fluid systems and processes. Although the research has improved the fracture conductivity and increased the effective artificial fracture length to some extent, the problems concerning the low compressive strength, rapid decline of conductivity resulting from the easy destruction of the pore and channel structure, difficult sand-loading process, and the distal end of the fractures cannot form an effective support have not been solved.

### SUMMARY OF THE INVENTION

The present disclosure aims to overcome the problems in the prior art with respect to high preparation cost of the proppant, low compressive strength and easy deformation, leading to rapid decline of conductivity , difficult sand-loading process, and the distal end of the cracks cannot form an effective support, and provides an aqueous thermosetting resin and a method therefor, a resin composition, a honeycomb-like resin product and a method therefor and a method for using thereof, by introducing a sulfonic acid groups into the molecular chain of the aqueous thermosetting resin, the resin can exhibit hydrophilicity, so that the preparation cost of a proppant can be reduced; in addition, the product prepared from the aqueous thermosetting resin is capable of exhibiting a honeycomb-like structure, when the product is used as a proppant, it has relatively high compressive strength and desirable heat resistance, and is not prone to deformation under a certain temperature and pressure.

In order to achieve the above object, the first aspect of the present disclosure provides an aqueous thermosetting resin, wherein the aqueous thermosetting resin has a structure represented by formula I; 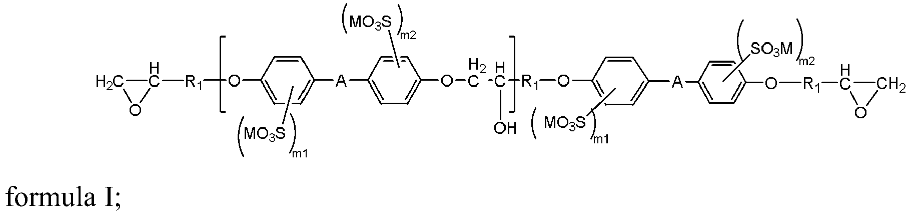
R₁ is C1-C4 alkylene;
A is 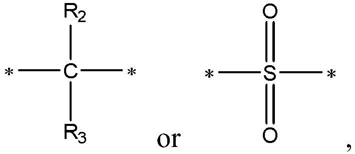 wherein R₂ and R₃ are each independently H, CH₃, CF₃, or CH₂CH₃;
$0 < m 1 + m 2 \leq 8 ;$
and M is K or Na.

The second aspect of the present disclosure provides a method for preparing the aqueous thermosetting resin comprising:
S1:in the presence of a first catalyst and water, contacting a bisphenol compound with a sulfonating agent to perform a sulfonation reaction to obtain a sulfonated bisphenol compound;
S2:in the presence of a second catalyst and water, contacting the sulfonated bisphenol compound with a monomer A represented by formula II to perform a polycondensation reaction to obtain the aqueous thermosetting resin; 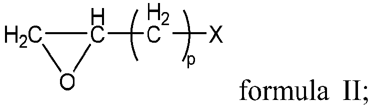
wherein p is an integer of 1 -4, and X is Cl or Br.

The third aspect of the present disclosure provides an aqueous thermosetting resin prepared with the method according to the second aspect of the present disclosure.

The fourth aspect of the present disclosure provides a resin composition, wherein the resin composition comprises: a component A and a component B, wherein the component A and the component B are each independently present;
the component A comprises: an aqueous thermosetting resin, a solvent-type thermosetting resin, an emulsifier, and water;
the component B comprises a curing agent;
the aqueous thermosetting resin is contained in an amount of 5wt%-40wt%, the solvent-type thermosetting resin is contained in an amount of 10wt%-76wt%, the emulsifier is contained in an amount of 0.5wt%-4wt%, and water is contained in an amount of 16wt%-50wt%;
the aqueous thermosetting resin is the aqueous thermosetting resin according to the first aspect or the third aspect of the present disclosure.

The fifth aspect of the present disclosure provides a honeycomb-like resin product, wherein the honeycomb-like resin product is prepared by mixing and curing the resin composition according to the fourth aspect of the present disclosure.

The sixth aspect of the present disclosure provides a method for preparing the honeycomb-like resin product comprising
mixing and curing the components of the resin composition according to the fourth aspect of the present disclosure to obtain the honeycomb-like resin product.

The seventh aspect the present disclosure provides a method of using the aqueous thermosetting resin according to the first aspect of the present disclosure or the third aspect of the present disclosure, the resin composition according to the fourth aspect of the present disclosure, or the honeycomb-like resin product according to the fifth aspect of the present disclosure in at least one of oil reservoir development, architectural floor tiles and adsorbent materials.

Due to the above technical scheme, an aqueous thermosetting resin and a preparation method therefor, a resin composition, a honeycomb-like resin product and a preparation method therefor and a use thereof provided by the present disclosure produce the following technical effects:
(1) the aqueous thermosetting resin is capable of imparting hydrophilicity to the resin by introducing hydrophilic sulfonic acid groups into a molecular chain, and acting as a phase-change proppant system with high conductivity, and reducing the preparation cost of said proppant.
(2) A product prepared by curing the resin composition derived from the aqueous thermosetting resin has a high compressive strength and is not prone to deformation under a certain temperature and pressure.

### BRIEF DESCRIPTION OF THE DRAWINGS

FIG. 1 illustrates an infrared spectrogram of the aqueous thermosetting resin prepared in Preparation Example 1;
FIG. 2 illustrates a photograph of the aqueous thermosetting resin prepared in Preparation Example 1;
FIG. 3 illustrates an ¹H-NMR spectrogram of the aqueous thermosetting resin A1.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present disclosure provides an aqueous thermosetting resin, wherein the aqueous thermosetting resin has a structure represented by formula I; 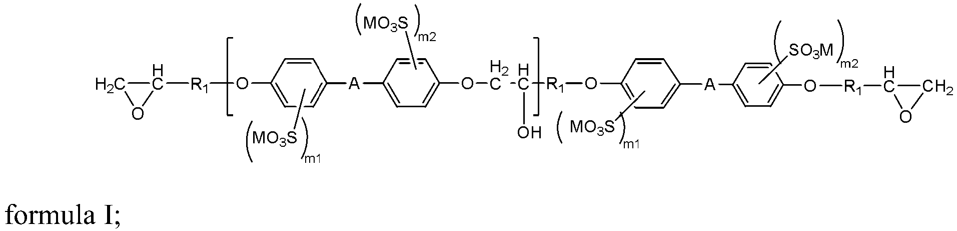
R₁ is C1-C4 alkylene;
A is 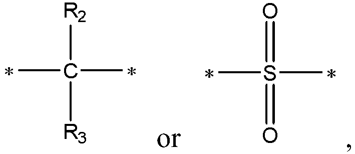 wherein R₂ and R₃ are each independently H, CH₃, CF₃, or CH₂CH₃; 0 < m1+m2 ≤ 8;
and M is K or Na.

In the present disclosure, hydrophilic sulfonic acid groups are introduced into formula I such that the resin has hydrophilicity, thereby forming a phase-change proppant system with high conductivity, and reducing the preparation cost of the proppant. In addition, since the aqueous resin is a liquid, the aqueous resin can fill various sizes of cracks and micro-cracks during the pump injection process, such that the problems for low conductivity, difficult sand-loading process, and the distal end of the cracks cannot form an effective support in the current fracturing process are fundamentally solved.

According to the present disclosure, R₁ is C1-C4 alkylene.

According to the present disclosure, A is 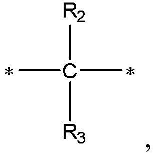 wherein R₂ and R₃ are each independently H, CH₃, CF₃, or CH₂CH₃.

According to an optional embodiment of the present disclosure, 1 < m1+m2 ≤ 5.

According to an optional embodiment of the present disclosure, M is Na.

According to the present disclosure, a content of S element in the aqueous thermosetting resin is within a range of 6-20wt%.

In the present disclosure, the content of S element in the aqueous thermosetting resin satisfies the above-mentioned range, enabling the aqueous thermosetting resin to have excellent water-solubility, and an aqueous solution formed by dispersing the aqueous thermosetting resin in water has a stable state.

In the present disclosure, the content of S element in the aqueous thermosetting resin may be any value within the range of 6-20wt%, for example 6wt%, 6.2wt%, 6.5wt%, 7wt%, 7.2wt%, 7.5wt%, 8wt%, 8.5wt%, 9wt%, 9.5wt%, 10wt%, 12wt%, 12.5wt%, 13wt%, 13.5wt%, 14wt%, 14.5wt%, 15wt%, 15.5wt%, 16wt%, 17wt%, 18.5wt%, 19wt%, 19.5wt%, 20wt%, and a random value within the new numerical range formed by combining any two individual point values thereof.

Optionally, the content of S element in the aqueous thermosetting resin is within the range of 10-15wt%.

According to the present disclosure, an epoxide equivalent of the aqueous thermosetting resin is within a range of 100g/eq-300g/eq.

In the present disclosure, the epoxide equivalent of the aqueous thermosetting resin satisfies the above range, it enables to increase its reactivity, and the reaction is more complete when the aqueous thermosetting resin is subjected to a curing reaction, thereby further increasing the compressive strength of the product prepared by using the resin as a proppant, and the product is not prone to deformation.

In the present disclosure, the epoxide equivalent of the aqueous thermosetting resin may be any value within the range of 100g/eq to 300g/eq, for example 100g/eq, 120g/eq, 125g/eq, 130g/eq, 135g/eq, 140g/eq, 150g/eq, 165g/eq, 170g/eq, 180g/eq, 185g/eq, 190g/eq, 195g/eq, 200g/eq, 210g/eq, 220g/eq, 225g/eq, 230g/eq, 240g/eq, 245g/eq, 250g/eq, 260g/eq, 265g/eq, 270g/eq, 280g/eq, 285g/eq, 290g/eq, 295g/eq, 300g/eq, and a random value within the new numerical range formed by combining any two individual point values thereof.

Optionally, the epoxide equivalent of the aqueous thermosetting resin is within the range of 150g/eq-200g/eq.

In the present disclosure, a weight-average molecular weight of the aqueous thermosetting resin is within a range of 2,000g/mol-10,000g/mol, optionally within the range of 3,000g/mol-5,000g/mol.

In the present disclosure, the weight-average molecular weight of the aqueous thermosetting resin may be any value within the range of 2,000g/mol-10,000g/mol, for example 2,000g/mol, 2,200g/mol, 2,300g/mol, 2,500g/mol, 3,000g/mol, 3,500g/mol, 3,600g/mol, 4,000g/mol, 4,200g/mol, 4,500g/mol, 4,800g/mol, 5,000g/mol, 5,300g/mol, 5,500g/mol, 5,600g/mol, 6,000g/mol, 6,500g/mol, 6,700g/mol, 7,000g/mol, 7,500g/mol, 7,600g/mol, 7,800g/mol, 8,000g/mol, 8,100g/mol, 8,200g/mol, 8,500g/mol, 8,700g/mol, 9,000g/mol, 9,200g/mol, 9,500g/mol, 9,800g/mol, 10,000g/mol, and a random value within the new numerical range formed by combining any two individual point values thereof.

The second aspect of the present disclosure provides a method for preparing the aqueous thermosetting resin comprising:
S1:in the presence of a first catalyst and water, contacting a bisphenol compound with a sulfonating agent to perform a sulfonation reaction to obtain a sulfonated bisphenol compound;
S2: in the presence of a second catalyst and water, contacting the sulfonated bisphenol compound with a monomer A represented by formula II to perform a polycondensation reaction to obtain the aqueous thermosetting resin; 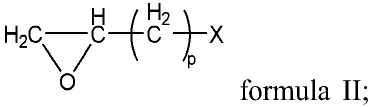
wherein p is an integer of 1 - 4, and X is Cl or Br.

In the present disclosure, a sulfonation of a bisphenol compounds is accomplished by contacting a sulfonating agent with a bisphenol compound, polycondensation of the sulfonated bisphenol compound with the monomer represented by formula II, an aqueous thermosetting resin containing sulfonic acid groups can be prepared, and the thermosetting resin has excellent hydrophilicity, is capable of curing under an aqueous environment, and includes interconnected pores while maintaining a high strength.

According to the present disclosure, in step S1, the bisphenol compound is at least one selected from the group consisting of bisphenol A, bisphenol S, bisphenol B, bisphenol F, and bisphenol AF.

According to the present disclosure, the sulfonating agent is at least one selected from the group consisting of concentrated sulfuric acid, chlorosulfonic acid, and sulfamic acid.

According to the present disclosure, the first catalyst is a Lewis acid.

In the present disclosure, the Lewis acid may be a Lewis acid commonly used in the field, for example titanium tetrachloride, ferric trichloride, ferric trioxide, zirconium oxychloride, aluminum oxide, aluminum trichloride, tin tetrachloride hydrate.

According to the present disclosure, a molar ratio of the bisphenol compound to the sulfonating agent is 1: (1-5), optionally 1: (2-4).

In the present disclosure, the molar ratio of the bisphenol compound to the sulfonating agent is any value within the range of 1: (1-5), for example, 1:1, 1:1.1, 1:1.2, 1:1.3, 1:1.4, 1:1.5, 1:1.8, 1:2, 1:2.3, 1:2.5, 1:2.8, 1:3, 1:3.3, 1:3.5, 1:3.8, 1:4, 1:4.1, 1:4.2, 1:4.5, 1:4.8, 1:4.9, 1:5, and a random value within the new numerical range formed by combining any two individual point values thereof.

According to the present disclosure, a mass ratio of the bisphenol compound to the first catalyst is 1: (0.0001-0.0008).

In the present disclosure, the mass ratio of the bisphenol compound to the first catalyst satisfies the above range, which can reduce the reaction temperature by 20°C-30°C, and the reaction conditions become milder.

Optionally, the mass ratio of the bisphenol compound to the first catalyst is 1: (0.0003-0.0005).

In the present disclosure,, the mass ratio of the bisphenol compound to the first catalyst is any value within the range of 1: (0.0003-0.0005), for example, 1:0.0001, 1:0.0002, 1:0.0003, 1:0.0004, 1:0.0005, 1:0.0006, 1:0.0007, 1:0.0008, and a random value within the new numerical range formed by combining any two individual point values thereof.

According to the present disclosure, in step S2, in formula II, p is an integer of 1-3, and X is Cl.

According to the present disclosure, the second catalyst is an alkali.

In the present disclosure, the alkali may be an alkali commonly used in the field, for example, NaOH, KOH, Ca(OH)₂ et al.

Optionally, the second catalyst is optionally NaOH.

According to the present disclosure, a mass ratio of the sulfonated bisphenol compound to the monomer A is 1: (0.25-0.65).

In the present disclosure, the mass ratio of the sulfonated bisphenol compound to the monomer A satisfies the above range such that the prepared aqueous thermosetting resin has a specific epoxide equivalent weight as required, which is capable of performing a phase change reaction with a curing agent under the formation conditions to form a honeycomb-like proppant having a suitable pore and channel structure.

Optionally , the mass ratio of the sulfonated bisphenol compound to the monomer A is 1: (0.3-0.45).

In the present disclosure, the mass ratio of the sulfonated bisphenol compound to the monomer A may be any value within the range of 1: (0.25-0.65), for example, 1:0.25, 1:0.26, 1:0.27, 1:0.28, 1:0.3, 1:0.32, 1:0.33, 1:0.35, 1:0.38, 1:0.4, 1:0.42, 1:0.45, and a random value within the new numerical range formed by combining any two individual point values thereof.

According to the present disclosure, a mass ratio of the sulfonated bisphenol compound to the second catalyst is 1: (0.1-0.5), optionally 1: (0.15-0.38).

In the present disclosure, the mass ratio of the sulfonated bisphenol compound to the second catalyst may be any value within the range of 1: (0.1-0.5), for example, 1:0.1, 1:0.15, 1:0.18, 1:0.2, 1:0.24, 1:0.26, 1:0.27, 1:0.28, 1:0.3, 1:0.32, 1:0.33, 1:0.35, 1:0.38, and a random value within the new numerical range formed by combining any two individual point values thereof.

According to the present disclosure, the sulfonation reaction conditions comprise a reaction temperature of 120-150°C and a reaction time of 2-6h.

Optionally, the sulfonation reaction conditions comprise the reaction temperature of 130-140°C and the reaction time of 2-4h.

According to the present disclosure, the polycondensation reaction conditions comprise a reaction temperature of 40-80°C and a reaction time of 2-4h.

Optionally, the polycondensation reaction conditions comprise the reaction temperature of 50-70°C and the reaction time of 2-3h.

The present inventors have discovered that the concentration of oxygen gas in the system is controlled not more than 3.1mg/L during the preparation process of the aqueous thermosetting resin, which is advantageous for the smooth reaction process and the efficient production of an aqueous thermosetting resin having a specific structure.

Illustratively, according to an optional embodiment of the present disclosure, the method for preparing the aqueous thermosetting resin comprising:
S1: in the presence of a Lewis acid and water, contacting a bisphenol compound which is at least one selected from the group consisting of bisphenol A, bisphenol S, bisphenol B, bisphenol F, and bisphenol AF with a sulfonating agent which is at least one selected from the group consisting of concentrated sulfuric acid, chlorosulfonic acid, and sulfamic acid to perform a sulfonation reaction at a reaction temperature of 130-140°C for a reaction time of 2-4h to obtain a sulfonated bisphenol compound; wherein a molar ratio of the bisphenol compound to the sulfonating agent is 1: (2-3), and the mass ratio of the bisphenol compound to the Lewis acid is 1: (0.0003-0.0005).
S2: adding an alkali to deionized water, and adding the sulfonated bisphenol compound, dropwise adding a monomer A represented by formula II under a temperature condition not more than 60°C to perform a polycondensation reaction at a reaction temperature of 50-70°C for a reaction time is 2-3h to obtain an aqueous thermosetting resin, wherein the mass ratio of the sulfonated bisphenol compound to the monomer A is 1: (0.3-0.45), and the mass ratio of the sulfonated bisphenol compound to the alkali is 1: (0.15-0.3).

The third aspect of the present disclosure provides an aqueous thermosetting resin prepared with the method according to the second aspect of the invention.

The fourth aspect of the present invention provides a resin composition, wherein the resin composition comprises: a component A and a component B, wherein the component A and the component B are each independently present;
the component A comprises: an aqueous thermosetting resin, a solvent-type thermosetting resin, an emulsifier, and water;
the component B comprises a curing agent;
the aqueous thermosetting resin is contained in an amount of 5wt%-40wt%, the solvent-type thermosetting resin is contained in an amount of 10wt%-76wt%, the emulsifier is contained in an amount of 0.5wt%-4wt%, and water is contained in an amount of 16wt%-50wt%;

The aqueous thermosetting resin is the aqueous thermosetting resin according to the first aspect or the third aspect of the present disclosure.

In the present disclosure, the aqueous thermosetting resin of the composition is the aqueous thermosetting resin according to the first aspect or the third aspect of the present disclosure, and the contents of the components satisfy the aforementioned ranges, when the resin product prepared with the composition is used as the proppant, the product has desirable compressive strength and is not prone to deformation.

Optionally, the aqueous thermosetting resin is contained in the amount of 30wt%-40wt%, the solvent-type thermosetting resin is contained in the amount of 20wt%-40wt%, the emulsifier is contained in the amount of 2wt%-3wt%, and water is contained in the amount of 17wt%-48wt%.

In the present disclosure, the content of the water-soluble thermosetting resin is any value within the range of 30wt%-40wt%, for example, 30wt%, 31wt%, 31.5wt%, 32wt%, 33.5wt%, 35wt%, 35.5wt%, 36wt%, 36.5wt%, 37wt%, 38.5wt%, 39wt%, 39.5wt%, 40wt%, and a random value within the new numerical range formed by combining any two individual point values thereof.

In the present disclosure, the content of the solvent-type thermosetting resin is any value within the range of 20wt%-40wt%, for example, 20wt%, 21wt%, 21.5wt%, 23wt%, 23.5wt%, 24wt%, 25wt%, 26.5wt%, 27wt%, 28wt%, 29wt%, 30wt%, 31wt%, 31.5wt%, 32wt%, 33.5wt%, 35wt%, 35.5wt%, 36wt%, 36.5wt%, 37wt%, 38.5wt%, 39wt%, 39.5wt%, 40wt%, and a random value within the new numerical range formed by combining any two individual point values thereof.

In the present disclosure, the content of the emulsifier may be any value within the range of 2wt%-3wt%, for example 2wt%, 2.1wt%, 2.2wt%, 2.5wt%, 2.6wt%, 2.7wt%, 2.8wt%, 2.9wt%, 3wt%, and a random value within the new numerical range formed by combining any two individual point values thereof.

According to the present disclosure, the curing agent is used in an amount of 50-80 parts, optionally 60-80 parts, based on 100 parts by weight of the component A.

In the present disclosure,, based on 100 parts by weight of the component A, the curing agent is used in an amount of any value within the range of 50-80 parts, for example, 50 parts, 51 parts, 53 parts, 55 parts, 56 parts, 58 parts, 60 parts, 61 parts, 63 parts, 65 parts, 67 parts, 69 parts, 70 parts, 71 parts, 73 parts, 75 parts, 78 parts, 80 parts, and a random value within the new numerical range formed by combining any two individual point values thereof.

According to the present disclosure, the emulsifier is selected from a cationic emulsifier and/or an anionic emulsifier.

According to the present disclosure, the cationic emulsifier is at least one selected from the group consisting of dodecyl trimethyl ammonium chloride, tetradecyl trimethyl ammonium chloride, hexadecyl trimethyl ammonium chloride, octadecyl trimethyl ammonium chloride, docosyl trimethyl ammonium chloride, N,N-ethylene bis-octadecyl dimethyl ammonium chloride, dodecyl dimethyl benzyl ammonium chloride, hexadecyl dimethyl benzyl ammonium chloride, and octadecyl dimethyl benzyl ammonium chloride.

According to the present disclosure, the anionic emulsifier is at least one selected from the group consisting of sodium stearate, sodium dodecyl sulfate, sodium dodecyl benzene sulfonate, sodium oleate, sodium laurate, sodium abietate, sodium dodecyl phenyl ether disulfonate, and sodium dibutyl naphthyl sulfonate.

According to the present disclosure, the emulsifier includes a cationic emulsifier and an anionic emulsifier.

According to the present disclosure, a mass ratio of the cationic emulsifier to the anionic emulsifier is 1: (0.25-1).

In the present disclosure, the mass ratio of the cationic emulsifier to the anionic emulsifier satisfies the above range, enabling a further efficient production of the aqueous thermosetting resin, and resulting in a more excellent overall performance of the aqueous thermosetting resin.

Optionally, the mass ratio of the cationic emulsifier to the anionic emulsifier is 1: (0.3-0.65).

In the present disclosure, the mass ratio of the cationic emulsifier to the anionic emulsifier may be any value within the range of 1: (0.25-0.65), for example, 1:0.25, 1:0.26, 1:0.27, 1:0.28, 1:0.3, 1:0.32, 1:0.33, 1:0.35, 1:0.38, 1:0.4, 1:0.42, 1:0.45, 1:0.5, 1:0.6, 1:0.65, 1:0.7, 1:0.75, 1:0.8, 1:0.85, 1:0.9, 1:0.95, 1:1, and a random value within the new numerical range formed by combining any two individual point values thereof.

According to the present disclosure, the solvent-type thermosetting resin is at least one selected from the group consisting of epoxy resin, polyimide, and unsaturated resin.

In the present disclosure, the solvent-type thermosetting resin is selected from the above-mentioned kinds, which further facilitates that the resin product prepared from the composition has a higher compressive strength.

According to the present disclosure, the curing agent is selected from a water-based phenolic resin and/or an unsaturated amide polymer.

In the present disclosure, the unsaturated amide polymer is selected from the group consisting of unsaturated amide polymer A and/or unsaturated amide polymer B.

According to an embodiment of the disclosure, the unsaturated amide polymer A comprises a structural unit Ia, a structural unit IIa and a structural unit IIIa;
the structural unit Ia has a structure represented by formula la, the structural unit IIa has a structure represented by formula 2a, and the structural unit IIIa has a structure represented by at least one of formula 3a, formula 4a, and formula 5a;

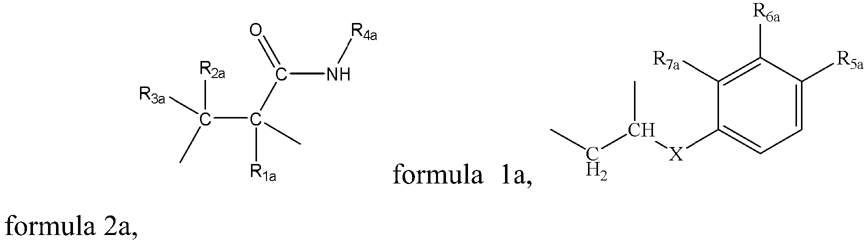

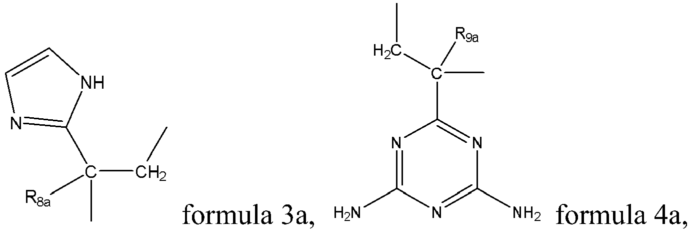

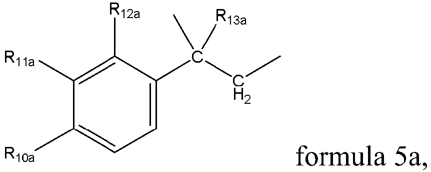

wherein in formula 1a, R₁ₐ is -H or -CH₃, R₂ₐ and R₃ₐ are each independently -H or C1-C18 alkyl; R₄ₐ is -H, A, C1-C20 alkyl or -(CH₂)ₙ-O-R₂₁ₐ; R₂₁ₐ is -H or C1-C18 alkyl, and n is an integer of 0-12;

A has the structure represented by formula 6a; 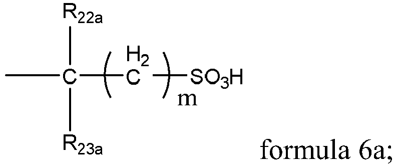
in formula 6a, R₂₂ₐ and R₂₃ₐ are each independently -H or C1-C18 alkyl, and m is an integer of 0-18;
in formula 2a, R₅ₐ, R₆ₐ and R₇ₐ are each independently -H, C1-C12 alkyl or -(CH₂)ᵣ-OH, r is an integer of 1-12; X is -(CH₂)_{z}-, z is an integer of 0-5;
in formula 3a, R₈ₐ is -H or -CH₃;
in formula 4a, R₉ₐ is -H or -CH₃;
in formula 5a, R₁₀ₐ, R₁₁ₐ and R₁₂ₐ are each independently -H or -NH₂, and at least one is -NH₂; R₁₃ₐ is -H or -CH₃.

In the present disclosure, the unsaturated amide copolymer A contains the above-mentioned structural units Ia, structural units IIa, and structural units IIIa having a specific structure respectively, in particular, due to the introduction of the structural unit IIIa, the side groups of the unsaturated amide copolymer A include a large number of amine groups, when the curing agent composition containing the copolymer is used for curing an epoxy resins, it is capable of curing the epoxy resins under the temperature range of 90°C-150°C.

Specifically, the unsaturated amide polymer A according to the present disclosure comprises the structural units IIa represented by formula 2a, it not only can adjust the intrinsic viscosity of the unsaturated amide polymer A to meet the requirements of a curing agent for epoxy resin, but also improve the strength of cured products obtained with a curing agent composed of the unsaturated amide polymer A, particularly the strength of epoxy resin, because the structural units IIIa comprise rigid groups.

Optionally, in a specific embodiment of the present disclosure, in formula 1a, R₁ₐ is -H or -CH₃, R₂ₐ and R₃ₐ are each independently -H or C1-C12 alkyl; R₄ₐ is -H, A, C8-C12 alkyl or -(CH₂)ₙ-O-R₂₁ₐ; R₂₁ₐ is C1-C12 alkyl, and n is an integer of 0-12. Optionally, R₁ₐ is -H or -CH₃, R₂ₐ and R₃ₐ are each independently -H, and R₄ₐ is -H, C2 alkyl or C12 alkyl; optionally, R₁ₐ, R₂ₐ, R₃ₐ and R₄ₐ are each independently -H.

In a specific embodiment of the present disclosure, A has the structure represented by formula 6a; 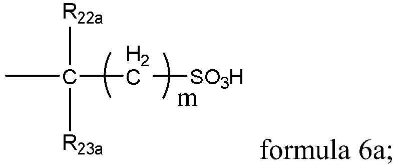 in formula 6a, R₂₂ₐ and R₂₃ₐ are each independently -H or C1-C12 alkyl, m is an integer of 1-12; optionally, R₂₂ₐ and R₂₃ₐ are each independently -H or C1-C6 alkyl, m is an integer of 1-6, optionally, R₂₂ₐ and R₂₃ₐ are each independently -H or C1-C3 alkyl, m is an integer of 1-3.

In the present disclosure, R₂₂ₐ and R₂₃ₐ are each independently -H or C1-C12 alkyl, such as -H, C2 alkyl, C3 alkyl, C4 alkyl, C5 alkyl, C6 alkyl, C7 alkyl, C8 alkyl, C9 alkyl, C10 alkyl, C11 alkyl, C12 alkyl.

In the present disclosure, m is an integer of 1-12, it may be, for example, 1, 2, 3, 4, 5, 6, 7, 8, 9, 10, 11, 12.

In a specific embodiment of the present disclosure, in formula 2a, R₅ₐ is -(CH₂)ᵣ-OH or -H, and r is an integer of 1-3; R₆ₐ and R₇ₐ are each independently -H; X is -(CH₂)_{z}-, and z is an integer of 0-2; more preferably, R₅ₐ, R₆ₐ and R₇ₐ are each independently -H.

In a specific embodiment of the present disclosure, in formula 3a, R₈ₐ is -H.

In a specific embodiment of the present disclosure, in formula 4a, R₉ₐ is -H.

In a specific embodiment of the present disclosure, in formula 5a, R₁₀ₐ, R₁₁ₐ and R₁₂ₐ are each independently -H or -NH₂, and at least one is -NH₂; R₁₃ₐ is -H.

According to the present disclosure, the structural units Ia is contained in an amount of 65wt%-85wt%, the structural units IIa is contained in an amount of 5wt%-7wt%, the structural units IIIa is contained in an amount of 12wt%-27wt%, based on the total weight of the unsaturated amide polymer.

Optionally, the structural units Ia is contained in the amount of 70wt%-82wt%, the structural units IIa is contained in the amount of 5wt%-6wt%, the structural units IIIa is contained in the amount of 12.5wt%-20wt%, based on the total weight of the unsaturated amide polymer.

In the present disclosure, based on the total weight of the unsaturated amide polymer, the content of the structural units Ia is any value within the range of 65wt%-85wt%, for example 65wt%, 66wt%, 66.5wt%, 67wt%, 68wt%, 68.5wt%, 69wt%, 70wt%, 71wt%, 72wt%, 73.5wt%, 74wt%, 75.5wt%, 76wt%, 77.5wt%, 78wt%, 79wt%, 80wt%, 81.5wt%, 82wt%, 82.5wt%, 83wt%, 84wt%, 84.5wt%, 85wt%, and a random value within the new numerical range formed by combining any two individual point values thereof.

In the present disclosure, based on the total weight of the unsaturated amide polymer, the content of the structural units IIa is any value within the range of 5wt%-6wt%, for example 5wt%, 5.1wt%, 5.2wt%, 5.3wt%, 5.4wt%, 5.5wt%, 5.6wt%, 5.8wt%, 6wt%, 6.5wt%, 7wt%, and a random value within the new numerical range formed by combining any two individual point values thereof.

In the present disclosure, based on the total weight of the unsaturated amide polymer, the content of the structural unit IIIa is at any value within the range of 12.5wt%-20wt%. For example, the content may be 12wt%, 12.5wt%, 13wt%, 13.5wt%, 13.8wt%, 14wt%, 14.4wt%, 14.6wt%, 14.8wt%, 15wt%, 16wt%, 16.5wt%, 17wt%, 17.5wt%, 18wt%, 18.5wt%, 19wt%, 19.5wt%, 20wt%, 21wt%, 22wt%, 23.5wt%, 24wt%, 25wt%, 25.5wt%, 26wt%, 27wt%, and a random value within the new numerical range formed by combining any two individual point values thereof.

In the present disclosure, total content of the structural unit Ia, the structural unit IIa and the structural unit IIIa is 100wt%.

In the disclosure, the content of each structural unit in the copolymer is calculated based on the feeding amount.

According to the present disclosure, an intrinsic viscosity of the copolymer at 25°C is within a range of 200mL/g-1,200mL/g, optionally, within the range of 900mL/g-1,200mL/g.

According to an embodiment of the present disclosure, the unsaturated amide polymer B comprises a structural unit Ib, a structural unit IIb, structural unit IIIb, and a structural unit IVb.

The structural unit Ib has a structure represented by formula 1b, the structural unit IIb has a structure represented by 2b and/or formula 3b, the structural unit IIIb has a structure represented by formula 4b and/or formula 5b, and the structural unit IVb has a structure represented by at least one of formula 6b, formula 7b and formula 8b.

The structural unit Ib is contained in an amount of 30wt%-50wt%, the structural unit IIb is contained in an amount of 30wt%-50wt%, the structural unit IIIb is contained in an amount of 4wt%-10wt%, and the structural unit IVb is contained in an amount of 10wt%-16wt%, based on the total weight of the unsaturated amide polymer B; 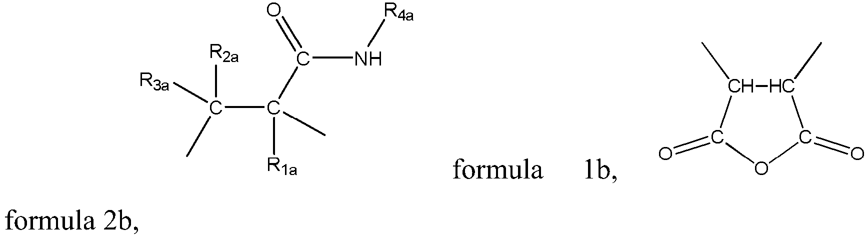 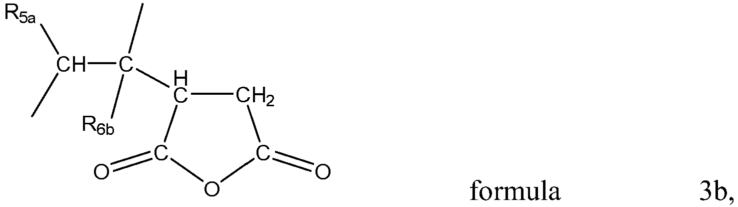 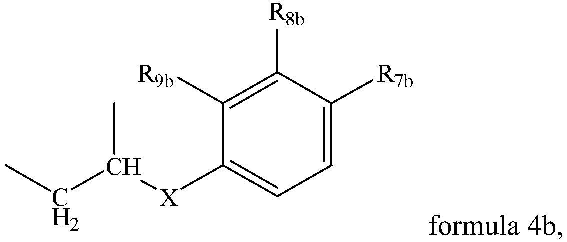 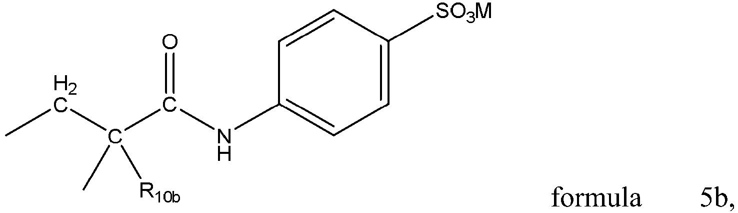 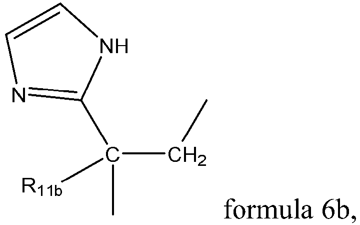 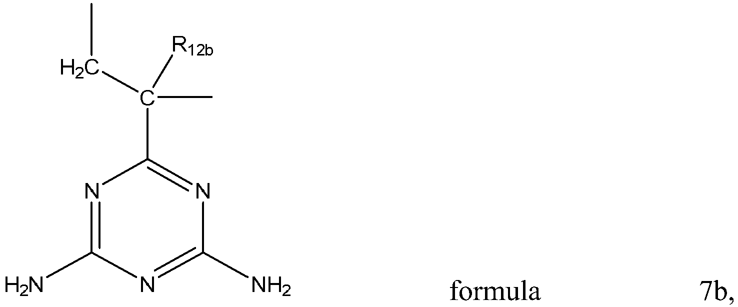 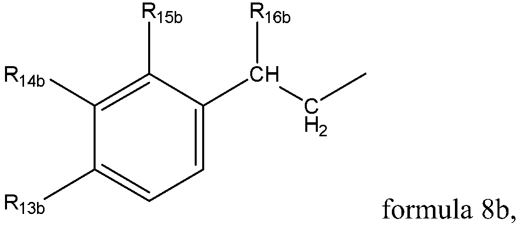
wherein in formula 1b, R_{1b} is H or CH₃, R_{2b} and R_{3b} are each independently H or C1-C18 alkyl; R_{4b} is H, A or -(CH₂)ₙ-O-R_{21b}; R_{21b} is C1-C18 alkyl, and n is an integer of 0-12;
A has the structure represented by formula 9b; 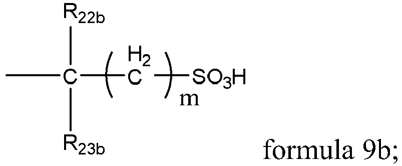
in formula 9b, R_{22b} and R_{23b} are each independently alkyl of H, C1-C18, m is an integer of 0 to 18;
in formula 3b, R_{5b} and R_{6b} are each independently H or C2-C16 alkyl;
in formula 4b, R_{7b}, R_{8b}, and R_{9b} are each independently alkyl, -(CH₂)ᵣ-OH, or -(CH₂)_{q}SO₃Q, Q is H, C or K, r is an integer of 0-12, Q is an integer of 0-10; X is -(CH₂)_{z}-, z is an integer of 0-5;
in formula 5b, R_{10b} is H or CH₃, M is H, Na or K;
in formula 6b, R_{11b} is H or CH₃;
in formula 7b, R_{12b} is H or CH₃;
in formula 8b, R_{13b}, R_{14b}, and R_{15b} are each independently H, NH₂, F, or Br; and R_{16b} is H or CH₃.

In the present disclosure, in formula 9b, R_{22b} and R_{23b} are each independently H, C1-C18 alkyl, it may be, for example, H, C1 alkyl, C2 alkyl, C3 alkyl, C4 alkyl, C5 alkyl, C6 alkyl, C7 alkyl, C8 alkyl, C9 alkyl, C10 alkyl, C11 alkyl, C12 alkyl, C13 alkyl, C14 alkyl, C15 alkyl, C16 alkyl, C17 alkyl, C18 alkyl.

In the present disclosure, m in formula 9b is an integer of 0-18, for example 0, 1, 2, 3, 4, 5, 6, 7, 8, 9, 10, 11, 12, 13, 14, 15, 16, 17, 18, and a random value within the new numerical range formed by combining any two individual point values thereof.

In the present disclosure, in formula 3b, R_{5b} and R_{6b} are each independently H or C2-C16 alkyl, for example H, C1 alkyl, C2 alkyl, C3 alkyl, C4 alkyl, C5 alkyl, C6 alkyl, C7 alkyl, C8 alkyl, C9 alkyl, C10 alkyl, C1l alkyl, C12 alkyl, C13 alkyl, C14 alkyl, C15 alkyl, C16 alkyl.

In the present disclosure, in formula 4b, R_{7b}, R_{8b}, and R_{9b} are each independently H or C1-C11 alkyl, it may be, for example, H, C1 alkyl, C2 alkyl, C3 alkyl, C4 alkyl, C5 alkyl, C6 alkyl, C7 alkyl, C8 alkyl, C9 alkyl, C10 alkyl, C1l alkyl.

In the present disclosure, the unsaturated amide polymer B comprises the above structural units Ib, IIb, IIIb and IVb has a specific structure respectively, in particular, due to the introduction of the structural units IIb and IVb, a large number of carboxyl groups and amino groups are present on side groups of the unsaturated amide polymer B, when the polymer is used as a curing agent for epoxy resin, it is capable of curing the epoxy resin at a lower temperature (50-90°C) or a higher temperature (90-150°C).

Specifically, the unsaturated amide polymer B according to the present disclosure contains the structural unit IIIb with a structure represented by formula 4b and/or formula 5b, it not only can adjust the molecular weight of the unsaturated amide polymer to meet the requirements of a curing agent for epoxy resin, but also can reduce the toughness of a product after curing with the unsaturated amide polymer B, and increase the hardness of a cured product, because the structural unit IIIb contains a rigid group.

Optionally, the unsaturated amide polymer B according to the present disclosure comprises the structural unit IIb with a structure represented by formula 2b and/or formula 3b, due to the introduction of the anhydride structure, it avoids the loss of carboxylic acid and amine groups due to the intramolecular ring structure formed resulting from the facile reaction of carboxylic acid and amine groups, thus the curing activity is reduced when the unsaturated amide polymer B is used a curing agent.

In the present disclosure, when the contents of structural units in the unsaturated amide polymer B are controlled within the above ranges, it not only enables the unsaturated amide polymer to have a suitable molecular weight, but also allows the prepared unsaturated amide polymer to contain a suitable content of rigid groups and active groups, when the unsaturated amide polymer B is used as a curing agent for curing an epoxy resin, it includes active groups that meet practical requirements, and can ensure that the epoxy resin product obtained from the curing process has a high compressive strength.

Optionally, the structural unit Ib is contained in an amount of 30-45wt%, the structural unit IIb is contained in an amount of 35-45wt%, the structural unit IIIb is contained in an amount of 6-10wt%, and the structural unit IVb is contained in an amount of 12-15wt%, based on the total weight of the unsaturated amide polymer B.

In the present disclosure, based on the total weight of the unsaturated amide polymer B, the content of the structural units Ib may be any value within the range of 30-50wt%,for example 30wt%, 31wt%, 31.5wt%, 32wt%, 33.5wt%, 35wt%, 35.5wt%, 36wt%, 36.5wt%, 37wt%, 38.5wt%, 39wt%, 39.5wt%, 40wt%, 41wt%, 41.5wt%, 42wt%, 43.5wt%, 45wt%, 45.5wt%, 46wt%, 46.5wt%, 47wt%, 48wt%, 49wt%, 49.5wt%, 50wt%, and a random value within the new numerical range formed by combining any two individual point values thereof.

In the present disclosure, based on the total weight of the unsaturated amide polymer B, the content of the structural units IIb may be any value within the range of 30-50wt%, for example, 30wt%, 31wt%, 31.5wt%, 32wt%, 33.5wt%, 35wt%, 35.5wt%, 36wt%, 36.5wt%, 37wt%, 38.5wt%, 39wt%, 39.5wt%, 40wt%, 41wt%, 41.5wt%, 42wt%, 43.5wt%, 45wt%, 45.5wt%, 46wt%, 46.5wt%, 47wt%, 48wt%, 49wt%, 49.5wt%, 50wt%, and a random value within the new numerical range formed by combining any two individual point values thereof.

In the present disclosure, based on the total weight of the unsaturated amide polymer B, the content of the structural units IIIb may be any value within the range of 4-10wt%, for example 4wt%, 4.2wt%, 4.5wt%, 5wt%, 5.5wt%, 5.6wt%, 6wt%, 6.2wt%, 6.5wt%, 7wt%, 7.2wt%, 7.5wt%, 8wt%, 8.5wt%, 9wt%, 9.5wt%, 10wt%, and a random value within the new numerical range formed by combining any two individual point values thereof.

In the present disclosure, based on the total weight of the unsaturated amide polymer B, the content of the structural units IVb may be any value within the range of 10-16wt%, for example 10wt%, 11wt%, 12.5wt%, 13wt%, 13.3wt%, 14wt%, 14.2wt%, 14.5wt%, 15wt%, 15.5wt%, 16wt%, and a random value within the new numerical range formed by combining any two individual point values thereof.

In the present disclosure, total content of the structural unit Ib, the structural unit IIb, the structural unit IIIb, and the structural unit IVb is 100wt%.

In the present disclosure, the content of each structural unit in the polymer is calculated based on the feeding amount.

In a optionally embodiment of the present disclosure, the structural unit Ib has a structure represented by formula lb, the structural unit IIb has a structure represented by formula 2b, the structural unit IIIb has a structure represented by formula 4b, and the structural unit IVb has a structure represented by formula 6b or 8b, optionally a structure represented by formula 8b.

In a specific embodiment of the present disclosure, in formula 1b, R_{1b} is H or CH₃, R_{2b} and R_{3b} are each independently H or C1-C12 alkyl; R_{4b} is H, A or -(CH₂)ₙ-O-R_{21b}; R_{21b} is C1-C12 alkyl, and n is an integer of 1-10. Optionally, R_{1b} is H or CH₃, and R_{2b}, R_{3b} and R_{4b} are each independently H; optionally, R_{1b}, R_{2b}, R_{3b} and R_{4b} are each H.

In the present disclosure, A has a structure represented by formula 9b. 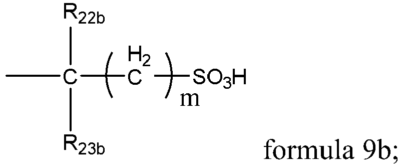 in formula 9b, R_{22b} and R_{23b} are each independently H or C1-C12 alkyl, m is an integer of 0-13, and optionally, R_{22b} and R_{23b} are each independently H or C1-C4 alkyl, m is an integer of 0-3.

In a specific embodiment of the present disclosure, in formula 3, R_{5b} and R_{6b} are each independently H or C2-C14 alkyl, preferably R_{5b} is H and R_{6b} is C₂H₅.

In a specific embodiment of the present disclosure, in formula 4b, R_{7b}, R_{8b} and R_{9b} are each independently H or C1-C8 alkyl, -(CH₂)ᵣ-OH or -(CH₂)_{q}SO₃Q, Q is H, Na or K, r is an integer of 0-10, q is an integer of 0-8; X is -(CH₂)_{z}-, z is an integer of 0-3, optionally R_{7b} is -(CH₂)_{q}SO₃Q, Q is H or Na, q is an integer of 0-2; R_{8b} and R_{9b} are each independently H; X_{b} is -(CH₂)_{z}-, z is 0; optionally, R_{7b} is -(CH₂)_{q}SO₃Q, Q is Na, q is 0.

In a specific embodiment of the present disclosure, in formula 5b, R_{10b} is H and M is Na.

In a specific embodiment of the present disclosure, R_{11b} in formula 6b is H.

In a specific embodiment of the present disclosure, R_{12b} in formula 7b is H.

In a specific embodiment of the present disclosure, in formula 8b, R_{13b}, R_{14b} and R_{15b} are each independently H or NH₂; R_{16b} is H or NH; and R_{17b} is H.

According to the present disclosure, an intrinsic viscosity of the unsaturated amide polymer B under the temperature condition of 25°C is within a range of 100mL/g-1,200mL/g, optionally within the range of 800mL/g-1,200mL/g.

In the present disclosure, the intrinsic viscosity of the unsaturated amide polymer B may be any value within the range of 100mL/g-1,200mL/g, for example 100mL/g, 150mL/g, 200mL/g, 250mL/g, 300mL/g, 350mL/g, 400mL/g, 450mL/g, 460mL/g, 500mL/g, 550mL/g, 560mL/g, 600mL/g, 630mL/g, 650mL/g, 670mL/g, 700mL/g, 760mL/g, 800mL/g, 850mL/g, 870mL/g, 890mL/g, 900mL/g, 920mL/g, 950mL/g, 980mL/g, 1,000mL/g, 1,100mL/g, 1,200mL/g, and a random value within the new numerical range formed by combining any two individual point values thereof.

According to the present disclosure, an apparent viscosity of the resin composition at 25°C is within a range of 100mPa·s - 400mPa·s, optionally 200mPa·s - 300mPa·s.

In the present disclosure, the apparent viscosity of the resin composition may be any value within the range of 100mPa·s - 400mPa·s, for example 100mPa·s, 110mPa·s, 150mPa·s, 160mPa·s, 180mPa·s, 190mPa·s, 200mPa·s, 210mPa·s, 250mPa·s, 260mPa·s, 300mPa·s, 330mPa·s, 350mPa·s, 380mPa·s, 400mPa·s, and a random value within the new numerical range formed by combining any two individual point values thereof.

In the present disclosure, the apparent viscosity is the apparent viscosity within 30 minutes after mixing the component A and the component B in the resin composition, because the component A is cured after 30 minutes due to the presence of a curing agent, the apparent viscosity at that time will be meaningless.

The fifth aspect of the present disclosure provides a honeycomb-like resin product, wherein the honeycomb-like resin product is prepared by mixing and curing the aforementioned resin composition.

According to the present disclosure, the honeycomb-like resin product comprises interconnected channels.

According to the preset disclosure, a porosity of the honeycomb-like resin product is within the range of 1%-40%.

In the present disclosure the porosity of the honeycomb-like resin product may be any value within the range of 1%-40%, for example, 1%, 2%, 3%, 4%, 4.5%, 5%, 5.5%, 6%, 6.5%, 7%, 8%, 9%, 10%, 12%, 12.5%, 13%, 15%, 16%, 17%, 18.5%, 19%, 19.5%, 20%, 21%, 23%, 26%, 28%, 30%, 31%, 32%, 33%, 35%, 36%, 37%, 38%, 39%, 40%, and a random value within the new numerical range formed by combining any two individual point values thereof

According to the present disclosure, a pore size of the honeycomb-like resin product is within a range of 0.1mm-0.7mm.

In the present disclosure, the pore size of the honeycomb-like resin product may be any value within the range 0.1nm-0.7nm, for example 0.1nm, 0.2nm, 0.3nm, 0.4nm, 0.5nm, 0.6nm, 0.7nm, and a random value within the new numerical range formed by combining any two individual point values thereof.

According to the present disclosure, a pore density of the honeycomb-like resin product is within a range of 20-500 per cm².

In the present disclosure, the pore density of the honeycomb-like resin product may be any value within the range of 20-500 per cm², for example 20 per cm², 22 per cm², 25 per cm², 30 per cm², 35 per cm², 36 per cm², 38 per cm², 40 per cm², 45 per cm², 50 per cm², 60 per cm², 65 per cm², 70 per cm², 78 per cm², 80 per cm², 90 per cm², 100 per cm², 110 per cm², 120 per cm²,150per cm², 180per cm², 200per cm², 210per cm², 225per cm², 230per cm², 250per cm², 300per cm², 325per cm², 330per cm², 350per cm², 400per cm², 450per cm², 465per cm², 470 per cm², 480 per cm², 500per cm², and a random value within the new numerical range formed by combining any two individual point values thereof.

In the present disclosure, the porosity, the pore size and the pore density of the honey-comb-like resin product meet the above ranges, enabling the resin product is not prone to deformation while having a high compressive strength.

In the present disclosure, the pore density refers to the number of pores in the range of a certain dimension (1cm ×1 cm) of the honeycomb-like resin product.

Optionally, the porosity of the honeycomb-like resin product is within the range of 20%-30%.

Optionally, the pore size of the honeycomb-like resin product is within the range of 0.3nm-0.5nm.

Optionally, the pore density of the honeycomb-like resin product is within the range of 50-400per cm².

According to the present disclosure, a density of the honeycomb-like resin product is within a range of 0.85-0.95 g/cm³, optionally within the range of 0.88-0.91 g/cm³.

According to the present disclosure, a compressive strength of the honeycomb-like resin product within the temperature range of 60-150°C is equal to or greater than 20MPa; optionally equal to or greater than 37MPa.

In the disclosure, the compressive strength is uniaxial compressive strength, in particular, the test method is as follows: the compressive strength is measured by using high-low temperature universal material testing machine, the test sample has a cylindrical shape, a diameter of 2.4cm, and a height of 4cm.

In an optionally embodiment of the present disclosure, the compressive strength of the honeycomb-like resin product at the temperature of 150°C is within a range of 20MPa-40MPa; optionally within the range of 37MPa-40MPa.

In the present disclosure, the compressive strength of the honeycomb-like resin product at the temperature of 150°C may be any value within the range of 20MPa-40MPa, for example, 20MPa, 21MPa, 22MPa, 25MPa, 26MPa, 28MPa, 30MPa, 32MPa, 35MPa, 37MPa, 38MPa, 39MPa, 40MPa, and a random value within the new numerical range formed by combining any two individual point values thereof.

According to the present disclosure, a deformation rate of the honeycomb-like resin product under the pressure of 40MPa and the temperature range of 60-150°C is equal to or less than 8%, optionally equal to or less than 4%, optionally equal to or less than 1.5%.

In the disclosure, the deformation rate of the honeycomb-like resin product under the pressure of 40MPa and the temperature range of 60-150°C is equal to or less than 8%, for example1%, 2%, 3%, 4%, 4.5%, 5%, 5.5%, 6%, 6.5%, 7%, 8%, and a random value within the new numerical range formed by combining any two individual point values thereof.

The sixth aspect of the present disclosure provides a method for preparing the honeycomb-like resin product comprising :
mixing and curing the components of the resin composition according to the fourth aspect of the present disclosure to obtain the honeycomb-like resin product.

According to the present disclosure, a curing conditions comprise a curing temperature is within a range of 90°C-150°C and a curing time is within a range of 10min to 6h.

Optionally, the curing conditions comprise the curing temperature is within a range of 120°C-150°C and the curing time is within a range of 30min to 4h.

The seventh aspect of the present disclosure provides a method for using the aqueous thermosetting resin according to the first aspect of the present disclosure or the third aspect of the present disclosure, the resin composition according to the fourth aspect of the present disclosure, or the honeycomb-like resin product according to the fifth aspect of the present disclosure in at least one of oil reservoir development, architectural floor tiles and adsorbent materials.

The following will provide a detailed description of the present disclosure through examples. In the following examples,
the content of element S in the aqueous thermosetting resin was measured by an elemental analysis method, in particular by means of an oxygen cylinder combustion method.

The epoxide equivalent of the aqueous thermosetting resin was measured by the hydrochloric acid-pyridine method, the specific method was as follows:
0.5g of a sample was added into 25mL of a solution containing hydrochloric acid-acetone, reacted at 45°C for 3.5h. The 25mL of a solution containing hydrochloric acid-acetone was taken, 3 droplets of the mixture indicator were added, and a blank titration (the titration should be completed within 30s) was carried out, the end point reached when the color was kept for 5s without discoloration, V₀ denoted a volume of the consumed NaOH standard solution, mL; the mixed solution was transferred, 3 droplets of the mixture indicator (the titration should be completed within 30s) were added, after the color was kept for 5s without discoloration, the titration was performed with sodium hydroxide, and the volume of NaOH standard solution consumed by 0.5mol of the test sample was recorded, it was denoted as V, mL, the epoxide equivalent was calculated according to the following formula:
   $EV = \frac{\left({V}_{0}-V\right) C}{m \times 10}$
wherein EV = epoxide equivalent, mol/100g; V₀ = volume of the NaOH standard solution consumed by the blank experiment, mL; V = volume of the NaOH standard solution consumed by the test sample, mL; C = concentration of the NaOH standard solution, mol/L; m = mass of the test sample, g.

The apparent viscosity of the resin composition was measured by a six-speed rotary viscometer, in particular, 300mL of phase change material fluid was placed in a sample chamber, the temperature was set at 25°C, and the rotation speed was set at 100r/min, the apparent viscosity was read after 1 min.

The weight average molecular weight of the resin composition was measured by the Gel Permeation Chromatography (GPC), specifically, the weight average molecular weight of the water-soluble thermosetting resin was measured by dissolving a quantity of resin in chromatographically pure tetrahydrofuran (THF), and prepared into the solution to be measured, the mobile phase was THF, and the reference object was polystyrene.

The porosity of the honeycomb-like resin product was measured by the saturated liquid volume method, the specific method was as follows:
the samples were cured with the dimensions of a diameter Φ of 24mm and a length L of 40mm. The cured samples were placed in a permeameter, it was ensured that leakage did not exist between the sample column and the permeameter. A pressure differential was applied after the assembly was completed, the volume and time of the fluid were recorded, and the permeability was finally calculated.
Calculation formula: ${K}_{g} = 2 {Q}_{2} L μ {P}_{0} / A \left({{P}_{1}}^{2}-{{P}_{2}}^{2}\right)$
wherein K_{g} denoted the measured permeability, µm²; Q₂ denoted the flow rate of fluid at an outlet of the rock core, mL/s; L denoted the rock core length, cm; A denoted the cross-sectional area of rock core, cm²; P₀ denoted atmospheric pressure, MPa; P₁ denoted the absolute pressure at an inlet of the rock core, MPa; P₂ denoted the absolute pressure at an outlet of the rock core, MPa; µ denoted the fluid viscosity, mPa·s.

The pore size of the honeycomb-like resin product was statistically measured and observed by the stereomicroscopy, in particular:
the honeycomb-like resin product was observed under the stereomicroscopy, the pore size of the honeycomb-like resin product was tested in the field of view of 1cm ×1cm, the pore size of 20 pores was tested, then calculated the average value to obtain the pore size of the honeycomb-like resin product.

The pore density of the honeycomb-like resin product was measured by the stereomicroscopy with the observation and statistical method, in particular:
the honeycomb-like resin product was observed under the stereomicroscopy, the pore size of the honeycomb-like resin product was tested in the field of view of 1cm ×1cm, the pore size of 20 pores was tested, then calculated the average value to obtain the pore diameter D of the honeycomb-like resin product, mm; the pore density was calculated based on the following formula: pore density = (1cm×1cm) × porosity/pore area, wherein the pore area was calculated based on that the pore was a circular pore, pore area =π×(D/2)², mm².

The density of the honeycomb-like resin product was calculated and measured by mass and volume.

The compressive strength of the honeycomb-like resin product was measured by a universal weight loader, wherein the test sample has a cylindrical shape, a diameter of 2.4cm, and a height of 4cm.

The deformation rate of the honeycomb-like resin product was measured according to the following method:
the diameter of the honeycomb-like resin product under the normal pressure and the temperature of 25°C was denoted as D₀, the honeycomb-like resin product was extruded by using a high-low temperature universal material testing machine under the pressure of 40MPa and the temperature of 90°C, the diameter of extruded honeycomb-like resin product was measured as D₁, the deformation rate = (D₀-D₁)/D₀×100%.

The reagents involved in the examples and comparative examples were as follows:
bisphenol compound: bisphenol A, purchased from the China National Pharmaceutical Group Co Ltd (Sinopharm Group);
sulfonating agent: 98wt% concentrated sulfuric acid, amidosulfonic acid, purchased from the Sinopharm Group;
the first catalyst: ferric trichloride, aluminum trichloride, water and tin tetrachloride, purchased from the Sinopharm Group;
the second catalyst: sodium hydroxide, purchased from the Sinopharm Group;
monomer A: epichlorohydrin (p is an integer of 1), purchased from the Sinopharm Group;
epibromohydrin (p is an integer of 1) , purchased from the Sinopharm Group;
epoxy resin: product number E44, purchased from the Baling Petrochemical Corporation.

The following preparation examples illustrated the preparation process of an aqueous thermosetting resin.

### Preparation Example 1

S1: 57g of bisphenol A, 0.02g of ferric trichloride, and 75g of concentrated sulfuric acid were contacted to carry out the sulfonation reaction at a reaction temperature of 130°C for a reaction time of 3h, a sulfonated bisphenol compound BPAS-1 was obtained, wherein the molar ratio of bisphenol A to concentrated sulfuric acid was 1:3, and the mass ratio of bisphenol A to ferric trichloride was 1:0.00035.

S2: 8g of NaOH was dissolved in deionized water, 48g of BPAS-1 was added, at a temperature of 50°C, 18g of epichlorohydrin was dropwise added to perform the polycondensation reaction at a reaction temperature of 50°C for a reaction time of 3h, the aqueous thermosetting resin A1 was obtained, wherein the mass ratio of BPAS-1 to NaOH was 1:0.17.

Wherein in the aqueous thermosetting resin A1, the content of element S was 13.4wt%, the epoxide equivalent was 182g/mol, the weight average molecular weight was 3,891, R₁ was C1 alkylene, R₂ was 1, R₃ was 1, M was Na, the yield of the aqueous thermosetting resin A1 was shown in Table 1.

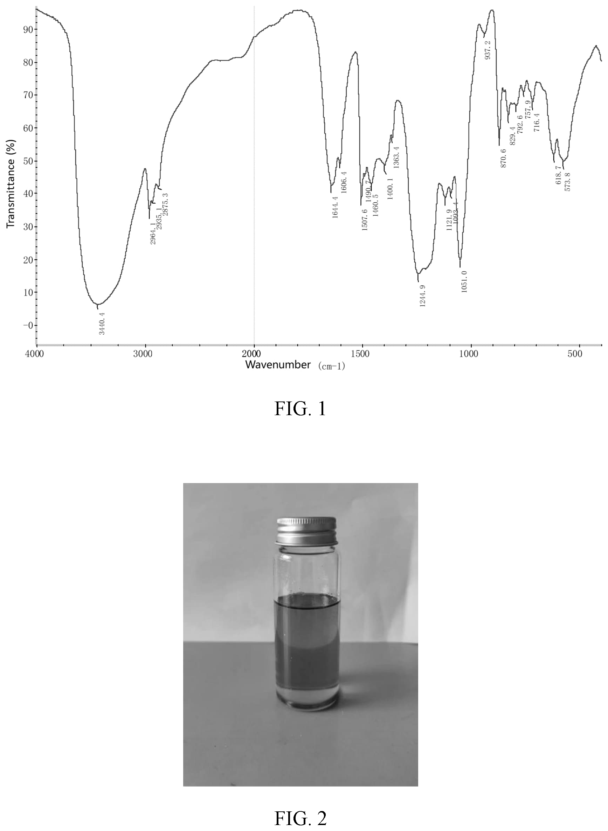

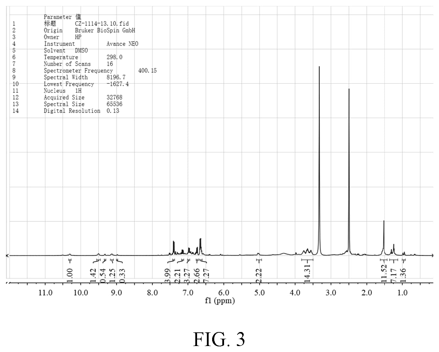

As illustrated by FIG. 1, the positions of the characteristic peaks of the epoxy groups in FIG. 1 were 1121cm⁻¹, 937cm⁻¹, 829cm⁻¹, respectively, the ether bonds and benzene rings were strong bodies of the product, their characteristic peaks had large areas, and the corresponding absorption peak did not present in the fingerprint region in the 1000-900 cm⁻¹ range, thus the presence of the epoxy group at 937cm⁻¹ was the most important evidence for the existence of the epoxy groups. The presence of the epoxy groups enables the aqueous thermosetting resin had desirable curing properties . As illustrated by FIG. 2, the aqueous thermosetting resin produced in preparation example 1 had excellent water solubility, the solution showed a clear and transparent brown color, the aqueous thermosetting resin was stably dispersed in water. FIG. 3 illustrated the ¹H-NMR spectrogram of the aqueous thermosetting resin A1 with the characteristic peaks as follows: d₆ DMSO: 1.5 (S, 12H, 4-CH₃), 3.53-3.71 (m, 14H, -CH₂-C-O-), 5.01 (d, 1H, 2-CH-O), 6.65-6.71 (m, 4H, 4-CH-(ph)), 6.94-7.1 (m, 1H, -CH₂), 7.35-7.41 (m, 4H, 4-CH-(ph)),9.12 (S, 2H, 2-OH). The clear water peak was presented at the chemical shift 3.3ppm, which indicated that the aqueous thermosetting resin A1 obtained in step S2 was a pure substance, without requiring further purification.

### Preparation Example 2

57g of bisphenol A, 0.03g of tin tetrachloride hydrate, and 100g of concentrated sulfuric acid were contacted to carry out the sulfonation reaction at a reaction temperature of 140°C for a reaction time of 2h, a sulfonated bisphenol compound BPAS-2 was obtained, wherein the molar ratio of bisphenol A to concentrated sulfuric acid was 1:4, and the mass ratio of bisphenol A to tin tetrachloride hydrate was 1:0.0005.

S2: 13g of NaOH was added into deionized water, such that the content of n(OH)⁻ was 2.34 mol/L, 36g of BPAS-2 was added, at a temperature of 70°C, 16.2g of epibromohydrin was dropwise added to perform the polycondensation reaction at a reaction temperature of 70°C for a reaction time of 2.5h, an aqueous thermosetting resin A2 was obtained, wherein the mass ratio of BPAS-2 to NaOH was 1:0.36.

Wherein in the aqueous thermosetting resin A2, the content of element S was 14.6wt%, the epoxide equivalent was 165g/mol, the weight average molecular weight was 4,386, R₁ was C1 alkylene, R₂ was 1, R₃ was 1, M was Na, the yield of the aqueous thermosetting resin A2 was shown in Table 1.

### Preparation Example 3

The aqueous thermosetting resin was prepared according to the method of preparation example 1, except that the bisphenol A was replaced by 60.5g of bisphenol B, and concentrated sulfuric acid was replaced by an equimolar amount of amidosulfonic acid. The content of element S in the aqueous thermosetting resin A3, the epoxide equivalent, the weight average molecular weight, and the yield of the aqueous thermosetting resin A3 were shown in Table 1.

### Preparation Example 4

The aqueous thermosetting resin was prepared according to the method of preparation example 1, except that the concentrated sulfuric acid was added in an amount of 125g such that the molar ratio of bisphenol A to concentrated sulfuric acid was 1:5. The content of element S in the aqueous thermosetting resin A4, the epoxide equivalent, the weight average molecular weight, and the yield of the aqueous thermosetting resin A4 were shown in Table 1.

### Preparation Example 5

The aqueous thermosetting resin was prepared according to the method of preparation example 1, except that in step S2, BPAS-1 was added in an amount of 36g such that the mass ratio of BPAS-1 to epichlorohydrin was 1:0.5. The content of element S in the aqueous thermosetting resin A5, the epoxide equivalent, the weight average molecular weight, and the yield of the aqueous thermosetting resin A5 were shown in Table 1.

### Preparation Example 6

The aqueous thermosetting resin was prepared according to the method of preparation example 1, except that the ferric trichloride was added in an amount of 0.04g such that the mass ratio of bisphenol A to ferric trichloride was 1:0.0007. The content of element S in the aqueous thermosetting resin A6, the epoxide equivalent, the weight average molecular weight, and the yield of the aqueous thermosetting resin A6 were shown in Table 1.

### Preparation Example 7

The aqueous thermosetting resin was prepared according to the method of preparation example 1, except that the sodium hydroxide was added in an amount of 4.8g such that the mass ratio of BPAS-1 to sodium hydroxide was 1:0.1. The content of element S in the aqueous thermosetting resin A7, the epoxide equivalent, the weight average molecular weight, and the yield of the aqueous thermosetting resin A7 were shown in Table 1.

### Preparation Example 8

The aqueous thermosetting resin was prepared according to the method of preparation example 1, except that in step S2, the epichlorohydrin was added in an amount of 9.6g, a mass ratio of BPAS-1 to epichlorohydrin was 1:0.2. The content of element S in the aqueous thermosetting resin A8, the epoxide equivalent, the weight average molecular weight, and the yield of the aqueous thermosetting resin A8 were shown in Table 1.

### Preparation Example 9

The aqueous thermosetting resin was prepared according to the method of preparation example 1, except that the concentrated sulfuric acid was added in an amount of 12.5g, the molar ratio of bisphenol A to concentrated sulfuric acid was 1:0.5. The content of element S in the aqueous thermosetting resin A9, the epoxide equivalent, the weight average molecular weight, and the yield of the aqueous thermosetting resin A9 were shown in Table 1.

### Comparative Preparation Example 1

The aqueous thermosetting resin was prepared according to the method of preparation example 1, except that bisphenol A was not sulfonated. The content of element S in the aqueous thermosetting resin D1, the epoxide equivalent, the weight average molecular weight, and the yield of the aqueous thermosetting resin D1 were shown in Table 1.

**Table 1**

| No. | A1 | A2 | A3 | A4 | A5 |
|---|---|---|---|---|---|
| Content of element S (wt%) | 13.4 | 14.6 | 14.8 | 16.2 | 12.1 |
| Epoxide equivalent /g/eq | 182 | 165 | 161 | 180 | 210 |
| Weight average molecular weight /g/mol | 3891 | 4386 | 3935 | 5120 | 3712 |
| m1+m2 | 3 | 4 | 3 | 4.5 | 3 |
| Bisphenol compound: sulfonating agent (n:n) | 1:3 | 1:4 | 1:3 | 1:4.5 | 1:3 |
| Bisphenol compound: cat1 (m:m) | 1:0.00035 | 1:0.0005 | 1:0.00035 | 1:0.00035 | 1:0.00035 |
| Sulfonated bisphenol compound: monomer A (m:m) | 1:0.375 | 1:0.45 | 1:0.375 | 1:0.375 | 1:0.5 |
| Sulfonated bisphenol compound: cat2 (m:m) | 1:0.17 | 1:0.36 | 1:0.17 | 1:0.15 | 1:0.17 |
| Yield | 86 | 78 | 83 | 45 | 85 |

| | | | | | |
|---|---|---|---|---|---|
| ps: cat1 refers to the first catalyst, cat2 refers to the second catalyst. | | | | | |

**Table 1 (continued)**

| No. | A6 | A7 | A8 | A9 | D1 |
|---|---|---|---|---|---|
| Content of element S (wt%) | 13.2 | 13 | 13.1 | 1.9 | 0 |
| Epoxide equivalent /g/eq | 182 | 112 | 131 | 168 | 112 |
| Weight average molecular weight /g/mol | 4366 | 3659 | 3765 | 3671 | 1889 |
| m1+m2 | 3 | 3 | 3 | 0.5 | 0 |
| Bisphenol compound: sulfonating agent (n:n) | 1:3 | 1:3 | 1:3 | 1:0.5 | / |
| Bisphenol compound: cat1 (m:m) | 1:0.00035 | 1:0.00035 | 1:0.00035 | 1:0.00035 | / |
| Sulfonated bisphenol compound: monomer A (m:m) | 1:0.375 | 1:0.375 | 1:0.375 | 1:0.375 | / |
| Sulfonated bisphenol compound: cat2 (m:m) | 1:0.17 | 1:0.17 | 1:0.17 | 1:0.17 | / |
| Yield | 76 | 87 | 86.5 | 89.5 | 43 |

The curing agent NA was prepared according to the following method:
S1: round bottom flask with four necks charged with 55 parts by weight of deionized water, 30 parts by weight of acrylamide (monomer A1), 3 parts by weight of sodium maleic anhydride monohexadecyl carboxylate (HEC16) (emulsifier), 2 parts by weight of nonyl phenol polyoxyethylene ether (OP-10) (emulsifier) was placed in a constant-temperature water bath at 30°C in the presence of nitrogen gas, stirred at a rotational speed of 1,000 r/min, and mixed for 10min to obtain a first mixture.
S2: 8 parts by weight of 4-vinylaniline (monomer C1) and 2 parts by weight of styrene (monomer B1) were added into the first mixture, stirred at l,000 r/min and mixed for 15min to obtain a second mixture.
S3: 0.01 part by weight of azobisisobutyronitrile and 0.02 part by weight of azobisisobutyrimidizoid hydrochloride (VA044) were added into the second mixture, stirred and mixed, the rotational speed was reduced to 300 r/min, polymerization was performed at 30°C for 4h, the product was discharged and purified, and an unsaturated amide copolymer NA was obtained. The initiator was used in an amount of 0.075wt%, based on the total amount of the monomer mixture.

The monomer A1 was used in an amount of 75wt%, the monomer B1 was used in an amount of 5wt%, and the monomer C1 was used in an amount of 20wt%, based on the total weight of the monomer mixture.

The content of structural unit I was 75wt%, the content of structural unit II was 5wt%, and the content of structural unit III was 20wt%, based on the total weight of the unsaturated amide copolymer NA.

The curing agent NB is prepared according to the following method:
S1: round bottom flask with four necks with 30 parts by weight of deionized water, 24 parts by weight of acrylamide (monomer A1), 27 parts by weight of maleic anhydride (monomer B1), 1.5 parts by weight of sodium maleate monohexadecyl carboxylate (HEC16) (emulsifier), 1 part by weight of nonyl phenol polyoxyethylene ether (OP-10), and 0.5 parts by weight of sodium maleic anhydride monomethyl acrylate hydroxyethyl ester carboxylate (MAME) (emulsifier) was placed in a constant-temperature water bath at 30°C in the presence of nitrogen gas, stirred at a rotational speed of 300 r/min, and mixed for 10min to obtain a first mixture.
S2: 10 parts by weight of 4-vinylaniline (monomer D1) and 6 parts by weight of styrene (monomer C1) were added into the first mixture, and mixed for 15min to obtain a second mixture.
S3: 0.006 part by weight of azobisisobutyronitrile (I1) and 0.024 part by weight of azobisisobutyrimidizoid hydrochloride (VA044) (I1) were added into the second mixture, stirred and mixed, polymerization was performed at 40°C for 4h, the product was purified, and an unsaturated amide copolymer NB was obtained.

The monomer A was used in an amount of 35.8wt%, the monomer B was used in an amount of 40.3wt%, the monomer C was used in an amount of 9wt%, and the monomer D was used in an amount of 14.9wt%, based on the total weight of the monomer mixture; the emulsifier is used in an amount of 4.4wt%, the total dosage of the initiator was 0.045wt%, the initiator azobisisobutyronitrile was used in an amount of 0.009wt%, and the initiator azobisisobutyrimidizoid hydrochloride was used in an amount of 0.036wt%.

The following examples illustrated the preparation of the honeycomb-like resin products

### Examples 1-11, Comparative Example 1

The resin compositions were subjected to mixing and curing according to the formulations in Table 2 and Table 2 (continued), the honeycomb-like products L1-L11 and DL1 were prepared.

Wherein the curing temperature was 120°C, the curing time was 2h; the apparent viscosity of the resin composition was illustrated in Table 2, the porosity, the pore diameter, the pore density, the density, the compressive strength and the deformation rate of the honeycomb-like resin products L1-L11 and DL1 were shown in Table 3.

**Table 2**

| No. | | | L1 | L2 | L3 | L4 | L5 | L6 | L7 |
|---|---|---|---|---|---|---|---|---|---|
| | Aqueous thermosetting resin | Type | A1 | A2 | A4 | A10 | A1 | A1 | A1 |
| Component A | | Dosage /g | 35 | 35 | 35 | 35 | 40 | 35 | 30 |
| | Solvent-type thermosetting resin | Type | E44 | E44 | E44 | E44 | E44 | E44 | E44 |
| | | Dosage /g | 20 | 20 | 20 | 20 | 25 | 25 | 20 |
| | Emulsifier | Type | / | / | / | / | / | / | 1:0.25^{a} |
| | | Dosage /g | / | / | / | / | / | / | 2 |
| | Water /g | | 45 | 45 | 45 | 45 | 35 | 40 | 48 |
| Component B | Curing agent | Type | Ethylene diamine | Ethylen e diamin e | Ethylen e diamin e | Ethylen e diamin e | Ethylen e diamin e | Ethylen e diamin e | Ethylen e diamin e |
| | | Dosag e /g | 80 | 80 | 80 | 80 | 70 | 80 | 80 |
| Apparent viscosity /mPa·s | | | 249 | 288 | 177 | 351 | 225 | 306 | 228 |

| | | | | | | | | | |
|---|---|---|---|---|---|---|---|---|---|
| ps: 1:0.25^{a} referred to the mass ratio of cationic emulsifier 18-2-18 to anionic emulsifier sodium stearate was 1:0.25. | | | | | | | | | |

**Table 2 (continued)**

| No. | | | L8 | L9 | L10 | L11 | DL1 | DL2 |
|---|---|---|---|---|---|---|---|---|
| Compon ent A | Aqueous thermosett ing resin | Type | A1 | A1 | A1 | A1 | A1 | D1 |
| | | Dosa ge /g | 35 | 35 | 10 | 35 | 2 | 35 |
| | Solvent-ty pe thermosett ing resin | Type | E44 | E44 | E44 | E44 | E44 | E44 |
| | | Dosa ge /g | 20 | 20 | 30 | 20 | 48 | 20 |
| | Emulsifier | Type | / | 1:0.5^{b} | / | / | / | / |
| | | Dosa ge /g | / | 2 | / | / | / | / |
| | Water /g | | 45 | 45 | 60 | 45 | 50 | 45 |
| Compon ent B | Curing agent | Type | polyami ne NA | NB | Ethyle ne diamin e | Ethyle ne diamin e | Ethyle ne diamin e | Ethyle ne diamin e |
| | | Dosa ge /g | 80 | 80 | 80 | 50 | 80 | 80 |
| Apparent viscosity /mPa·s | | | 219 | 246 | 183 | 192 | 159 | 24 |

| | | | | | | | | |
|---|---|---|---|---|---|---|---|---|
| ps: 1:0.5^{b} referred to the mass ratio of cationic emulsifier 18-2-18 to anionic emulsifier sodium stearate was 1:0.5. | | | | | | | | |

**Table 3**

| No. | Porosit y /% | Pore size /mm | Pore density / per cm² | Density /g/cm³ | Compressive strength /MPa | Deformation rate /% |
|---|---|---|---|---|---|---|
| L1 | 24 | 0.33 | 281 | 0.896 | 40 | 1.1 |
| L2 | 28 | 0.42 | 202 | 0.889 | 40 | 1.1 |
| L3 | 19 | 0.6 | 67 | 0.905 | 35 | 1.5 |
| L4 | 16 | 0.65 | 48 | 0.911 | 25 | 2.3 |
| L5 | 23 | 0.48 | 127 | 0.898 | 38 | 1.2 |
| L6 | 18 | 0.63 | 58 | 0.931 | 36 | 1.8 |
| L7 | 21 | 0.39 | 176 | 0.902 | 39 | 1 |
| L8 | 25 | 0.5 | 127 | 0.881 | 38 | 1 |
| L9 | 29 | 0.31 | 384 | 0.881 | 40 | 1 |
| L10 | 13 | 0.11 | 1369 | 0.923 | 24 | 3 |
| L11 | 15 | 0.18 | 590 | 0.915 | 26 | 4 |
| DL1 | 8 | 0.06 | 2857 | 0.95 | 10 | 8.5 |
| DL2 | 7 | 0.08 | 2142 | 0.945 | 11 | 7.9 |

As illustrated by the above results, the aqueous thermosetting resin products prepared by the preparation examples 1-11 in the present disclosure have desirable results, the honeycomb-like resin products prepared after curing have suitable pore and channel structure and porosity, and exhibit a strong compressive strength ( specifically not lower than 25MPa), and have a low deformation rate, which is not more than 4% under the pressure of 40MPa and the temperature of 150°C.

Furthermore, optionally examples 1-2, 5, 7-9 of the present disclosure produce better results with compressive strength not lower than 38MPa, and a deformation rate not more than 1.2% under the pressure of 40MPa and the temperature of 150°C.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. An aqueous thermosetting resin, wherein the aqueous thermosetting resin has a structure represented by formula I; 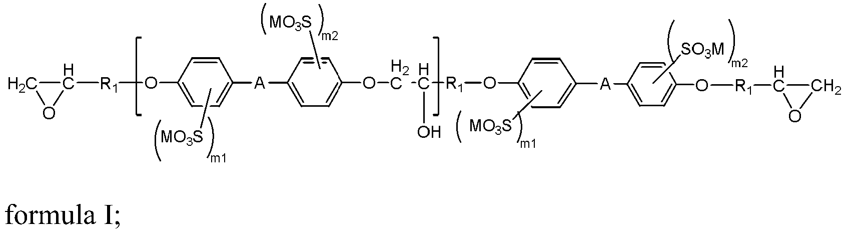
R₁ is C1-C4 alkylene;
A is 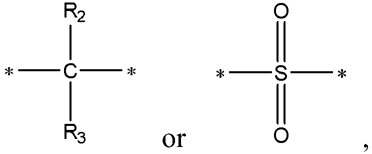 wherein R₂ and R₃ are each independently H, CH₃, CF₃, or CH₂CH₃; 0 < ml+m2 ≤ 8; and M is K or Na.

2. The aqueous thermosetting resin according to claim 1, wherein R₁ is C1-C3 alkylene;
and/or, A is 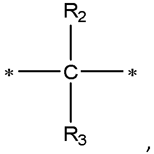 wherein R₂ and R₃ are each independently H, CH₃, CF₃, or CH₂CH₃; and M is Na.

3. The aqueous thermosetting resin according to claim 1 or 2, wherein a content of S element of the aqueous thermosetting resin is within a range of 6-20wt%, optionally 10-15wt%;
and/or, an epoxide equivalent of the aqueous thermosetting resin is within a range of 100g/eq-300g/eq, optionally 150g/eq-200 g/eq;
and/or, a weight-average molecular weight of the aqueous thermosetting resin is within a range of 2,000g/mol-10,000g/mol, optionally 3,000g/mol-5,000g/mol.

4. A method for preparing the aqueous thermosetting resin comprising:
S1: in the presence of a first catalyst and water, contacting a bisphenol compound with a sulfonating agent to perform a sulfonation reaction to obtain a sulfonated bisphenol compound;
S2: in the presence of a second catalyst and water, contacting the sulfonated bisphenol compound with a monomer A represented by formula II to perform a polycondensation reaction to obtain the aqueous thermosetting resin; 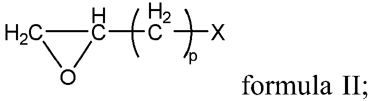 wherein p is an integer of 1 - 4, and X is Cl or Br.

5. The method according to claim 4, wherein in step S1, the bisphenol compound is at least one selected from a group consisting of bisphenol A, bisphenol S, bisphenol B, bisphenol F, and bisphenol AF;
and/or, the sulfonating agent is at least one selected from a group consisting of concentrated sulfuric acid, chlorosulfonic acid, and sulfamic acid;
and/or, the first catalyst is a Lewis acid;
and/or, a molar ratio of the phenol compound to the sulfonating agent is 1: (1-5), optionally 1: (2-4);
and/or, a mass ratio of the bisphenol compound to the first catalyst is 1: (0.0001-0.0008), optionally 1: (0.0003-0.0005).

6. The method according to claims 4 or 5, wherein in step S2, in formula II, p is an integer of 1-3, and X is Cl;
and/or, the second catalyst is an alkali;
and/or, a mass ratio of the sulfonated bisphenol compound to the monomer A is 1: (0.25-0.65), optionally 1: (0.3-0.5);
and/or, a mass ratio of the sulfonated bisphenol compound to the second catalyst is 1: (0.1-0.5), optionally 1: (0.15-0.38).

7. The method according to any one of claims 4-6, wherein the sulfonation reaction conditions comprise a reaction temperature of 120-150°C and a reaction time of 2-6h;
and/or, the polycondensation reaction conditions comprise a reaction temperature of 40-80°C and a reaction time of 2-4h.

8. An aqueous thermosetting resin prepared with the method according to any one of claims 4-7.

9. A resin composition, wherein the resin composition comprises: a component A and a component B, wherein the component A and the component B are each independently present;
the component A comprises: an aqueous thermosetting resin, a solvent-type thermosetting resin, an emulsifier, and water;
the component B comprises a curing agent;
the aqueous thermosetting resin is contained in an amount of 5wt%-40wt%, the solvent-type thermosetting resin is contained in an amount of 10wt%-76wt%, the emulsifier is contained in an amount of 0.5wt%-4wt%, and water is contained in an amount of 16wt%-50wt%;
the aqueous thermosetting resin is the aqueous thermosetting resin according to any one of claims 1-3 and 8.

10. The resin composition according to claim 9, wherein the aqueous thermosetting resin is contained in the amount of 30wt%-40wt%, the solvent-type thermosetting resin is contained in the amount of 20wt%-40wt%, the emulsifier is contained in the amount of 2wt%-3wt%, and water is contained in the amount of 17wt%-48wt%;
and/or, the curing agent is used in an amount of 50-80 parts, optionally 60-80 parts, based on 100 parts by weight of the component A.

11. The resin composition according to claim 9 or 10, wherein the emulsifier is selected from a cationic emulsifier and/or an anionic emulsifier;
optionally, the cationic emulsifier is at least one selected from a group consisting of dodecyl trimethyl ammonium chloride, tetradecyl trimethyl ammonium chloride, hexadecyl trimethyl ammonium chloride, octadecyl trimethyl ammonium chloride, docosyl trimethyl ammonium chloride, N,N-ethylene bis-octadecyl dimethyl ammonium chloride, dodecyl dimethyl benzyl ammonium chloride, hexadecyl dimethyl benzyl ammonium chloride, and octadecyl dimethyl benzyl ammonium chloride;
optionally, the anionic emulsifier is at least one selected from a group consisting of sodium stearate, sodium dodecyl sulfate, sodium dodecyl benzene sulfonate, sodium oleate, sodium laurate, sodium abietate, sodium dodecyl phenyl ether disulfonate, and sodium dibutyl naphthyl sulfonate.

12. The resin composition according to claim 11, wherein the emulsifier includes a cationic emulsifier and an anionic emulsifier;
wherein a mass ratio of the cationic emulsifier to the anionic emulsifier is 1: (0.25-1), optionally 1: (0.3-0.65).

13. The resin composition according to any one of claims 9-12, wherein the solvent-type thermosetting resin is at least one selected from a group consisting of epoxy resin, polyimide, and unsaturated resin;
the curing agent is selected from a water-based phenolic resin and/or an unsaturated amide polymer.

14. The resin composition according to any one of claims 9-13, wherein an apparent viscosity of the resin composition at 25°C is within the range of 100mPa·s - 400mPa·s, optionally 200mPa·s - 300mPa·s.

15. A honeycomb-like resin product, wherein the honeycomb-like resin product is prepared by mixing and curing the resin composition according to any one of claims 9-14.

16. The honeycomb-like resin product according to claim 15, wherein the honeycomb-like resin product comprises interconnected channels.

17. The honeycomb-like resin product according to claim 15 or 16, wherein a porosity of the honeycomb-like resin product is within a range of 1%-40%, optionally within the range of 20%-30%;
and/or, a pore size of the honeycomb-like resin product is within a range of 0.1mm-0.7mm; optionally within the range of 0.3mm-0.5mm;
and/or, a pore density of the honeycomb-like resin product is within a range of 20-500 per cm², optionally within the range of 50-400 per cm².

18. The honeycomb-like resin product according to any one of claims 15-17, wherein a density of the honeycomb-like resin product is within a range of 0.85-0.95 g/cm³, optionally within the range of 0.88-0.91 g/cm³.

19. The honeycomb-like resin product according to any one of claims 15-18, wherein a compressive strength of the honeycomb-like resin product within a temperature range of 60-150°C is equal to or greater than 20MPa; optionally equal to or greater than 37MPa;
and/or, a deformation rate of the honeycomb-like resin product under the pressure of 40MPa and the temperature range of 60-150°C is equal to or less than 8%, optionally equal to or less than 4%, optionally equal to or less than 1.5%.

20. A method for preparing the honeycomb-like resin product comprising: mixing and curing the components of the resin composition according to any one of claims 9-14 to obtain the honeycomb-like resin product.

21. The method according to claim 20, wherein the curing conditions comprise a curing temperature is within a range of 90°C-150°;and a curing time is within a range of 10min-6h;
optionally, wherein the curing conditions comprise the curing temperature is within the range of 120°C-150°;and the curing time is within the range of 30min-4h.

22. A method of using the aqueous thermosetting resin according to any one of claims 1-3 and 8, or the resin composition according to any one of claims 9-14, or the honeycomb-like resin product according to any one of claims 15-19 in at least one of oil reservoir development, architectural floor tiles and adsorbent materials.
